# EUROPEAN PATENT APPLICATION

(11) **EP 0 683 337 A1**
(43) Date of publication of application: **22.11.1995**
(21) Application number: 95106469.0
(22) Date of filing: 28.04.1995
(51) Int. Cl.: F16H 63/30, F16H 3/66

(54) **Shift control system for automatic transmissions**

(30) Priority: 16.05.1994 JP 124697/94
(71) Applicant: AISIN AW CO., LTD., Anjo-shi Aichi-ken (JP)
(72) Inventor: Tsukamoto, Kazumasa, Anjo-shi, Aichi-ken (JP); Hayabuchi, Masahiro, Anjo-shi, Aichi-ken (JP); Kadotani, Masanori, Anjo-shi, Aichi-ken (JP); Kasuya, Satoru, Anjo-shi, Aichi-ken (JP)
(74) Representative: VOSSIUS & PARTNER

(57) **Abstract**

A shift control system for an automatic transmission, comprising: a frictional engagement element arranged between the case of an automatic transmission (2) and one element of a planetary gear unit (P3,C3,S3); a hydraulic servo unit (3) for pushing the frictional engagement element in the axial direction; and a one-way clutch (F-2) connected to the element of the planetary gear unit and disengageably fixed to the case. The one-way clutch is so arranged at the side axially opposite to the frictional engagement element across the hydraulic servo unit as to have its outer race connected to the case and its inner race connected to the element of the planetary gear unit through a connection member (5) axially extending in the inner circumferential side of the hydraulic servo unit. The inner race is formed with a radial lubricating oil passage (53) leading to an oil passage (13) in a transmission shaft.

## Description

The present invention relates to a shift control system for an automatic transmission and, more particularly, to a related structure of a frictional engagement element for a planetary gear unit, a hydraulic servo unit and a one-way clutch.

In the automatic transmission, a one-way clutch of free wheel type, in which one element of a planetary gear unit is disengageably fixed for a shift in a case in dependence upon the direction of rotation, is arranged in parallel with a multi-disc brake so that it may establish an engine braking action when reversely driven. Specifically, the one-way clutch is arranged to have one of its inner and outer races fixed in the case and the other race connected to one element of the planetary gear unit. Likewise, the brake is arranged to have its one frictional engagement element fixed in the case and its other connected to one element of the planetary gear unit.

In the prior art, in which the one-way clutch and the brake are combined, the one-way clutch has its outer race connected to the carrier of the planetary gear unit to arranged the frictional engagement element between the carrier and the case and has its inner race fixed in the case, as disclosed in Japanese Patent Laid-Open No. 288753/1987. In Japanese Patent Laid-Open No. 126147/1993, on the other hand, there is disclosed another structure, in which the one-way clutch has its inner race connected to the ring gear to arrange the frictional engagement element between the ring gear and the case and its outer race fixed in the case.

In the former type in which the inner race is fixed in the case, the inner race is made irrotational. This makes it impossible to use the ordinary lubrication means for applying a centrifugal force to the lubricating oil fed from the in-shaft oil passage to introduce it as the centrifugal oil pressure into the one-way clutch. Thus, there arises a problem that another lubricating oil passage has to be formed to lead from the case to the inside of the one-way clutch. In the latter construction having the outer race fixed in the case, on the other hand, the centrifugal oil pressure can be fed into the one-way clutch if a radial lubricating oil passage is formed in the inner race. As a result, the lubrication can be effected by the ordinary means so that the construction therefor can be simplified. As viewed in the axial direction, however, the outer race is interposed between the piston of the hydraulic servo unit and the frictional engagement element. This makes it necessary to adopt the construction in which the frictional engagement element is axially pushed by a forked member extending from the piston through a local hole extending through the outer race, so that the facial pressure upon the portion to be pushed by the friction member becomes uneven. In order to compensate this, therefore, the pushing force has to be increased to enlarge the size of the hydraulic servo unit and reduce the durability of the friction member, thus causing another problem.

Therefore, the present invention has an object to provide a shift control system for an automatic transmission, which can solve the aforementioned two problems of the lubrication and the uneven facial pressure, as the structure in which the inner race of the one-way clutch is made rotatable although the frictional engagement element is directly pushed by the piston of the hydraulic servo unit.

Another object of the present invention is to provide such a connection structure of the planetary gear unit, as can arrange the one-way clutch in a case made separate from the frictional engagement element and the hydraulic servo unit.

Still another object of the present invention is to provide a one-way clutch arrangement suited for establishing a high load torque capacity.

In order to achieve the above-specified object, there is provided a shift control system for an automatic transmission of the present invention, which system comprises: a frictional engagement element arranged between the case of an automatic transmission and one element of a planetary gear unit; a hydraulic servo unit for pushing the frictional engagement element in the axial direction; and a one-way clutch connected to the element of the planetary gear unit for disengageably fixing the same to the case, wherein the one-way clutch is so arranged at the side axially opposite to the frictional engagement element across the hydraulic servo unit as to have its outer race connected to the case and its inner race connected to the element of the planetary gear unit through a connection member axially extending in the inner circumferential side of the hydraulic servo unit, and wherein the inner race is formed with a radial lubricating oil passage leading to an oil passage in a transmission shaft.

In the automatic transmission shift control system, moreover, the outer race is fitted in a case made separate of the case.

In the present invention, the one-way clutch is arranged in the side axially opposite to the frictional engagement element across the hydraulic servo unit, and one element of the planetary gear unit and the inner race are connected through the connection member so that the one-way clutch may not obstruct the direct facing relation between the frictional engagement element and the hydraulic servo unit. As a result, the frictional engagement element is prevented from having its engaging facial pressure uneven, so that its durability is not deteriorated. With the aforementioned constructed being adopted, on the other hand, the inner race of the one-way clutch is still allowed to rotate so that the centrifugal oil pressure by the simple radial oil passage can be fed to the one-way clutch.

Thanks to the adoption of the aforementioned connection relation, moreover, the one-way clutch is in the so-called "externally attached relation" to the planetary gear unit, the frictional engagement element and the hydraulic servo unit so that the transmission case excepting the portion for arranging the one-way clutch can be standardized. As a result, the manufacture process can be simplified and effected at a low cost by sharing the case with the transmission of another type using no one-way clutch. Since, moreover, the portion for mounting the frictional engagement element at the case side and the portion for mounting the outer race at the case side are made different, the degree of freedom for designing the latter mounting portion can be enhanced to intensify the engaging force accordingly. Thus, this construction effectively functions especially if it is used in the one-way clutch which is to be applied at a 1st speed for a high torque capacity in the automatic transmission.
Fig. 1 is a partial end face section showing the members of a portion of the shift control system according to an embodiment of the present invention; and
Fig. 2 is a skeleton diagram showing the entirety of the shift mechanism portion of an automatic transmission including the aforementioned shift control system.

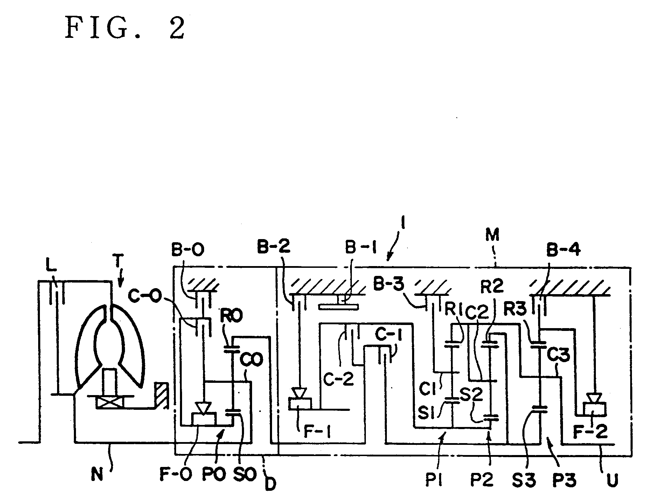

An embodiment of the present invention will be described in the following with reference to the drawings. First of all, the schematic construction will be described in the following. As shown in Fig. 2, an automatic transmission 1 has its mechanical portion given, in this embodiment, a five-speed construction which is made by combining an auxiliary transmission mechanism D composed of a pre-overdrive planetary gear unit, and a main transmission mechanism M composed of three simply connected planetary gear units for four forward and one reverse speeds. This mechanical portion is connected to a torque converter T equipped with a lockup clutch L.

The auxiliary transmission mechanism D is constructed such that a carrier C0 connected to an input shaft N is connected to a sun gear S0 through a one-way clutch F-0 and a multi-disc clutch C-0 in parallel to the former. These components are made engageable with a case through a multi-disc brake B-0. A ring gear R0 is connected to the main transmission mechanism M. On the other hand, this main transmission mechanism M is constructed of three sets of gear units P1 to P3 of simple connection, in which there are direct connections between a sun gear S1 and a sun gear S2, between a sun gear S3 and a ring gear R2, and between a carrier C2 and a carrier C3. The sun gears S1 and S2 are connected to the auxiliary transmission mechanism D through the multi-disc clutch C-2 and are made engageable with the case through a band brake B-1, a one-way clutch F-1 and a multi-disc brake B-2. Moreover, the sun gear S3 and the ring gear R2 are connected to the auxiliary transmission mechanism D through a multi-disc clutch C-1. A carrier C1 is made engageable with the case through a brake B-3, and a ring gear R3 is also made engageable with the case through a brake B-4 in parallel and a one-way clutch F-2. The carrier C3 is connected to an output shaft U.

In this automatic transmission 1, the rotation of the not-shown engine is transmitted through the torque converter T to the input shaft N of the auxiliary transmission mechanism D. And, the rotation of the input shaft N is transmitted, if the clutch C-0 is applied under the control of the not-shown hydraulic control unit to directly connect the auxiliary transmission mechanism D and if the clutch C-1 of the main transmission mechanism M is applied to release all the remaining frictional engagement elements, to the sun gear S3 of the gear unit P3 so that it is outputted as the 1st speed rotation from the carrier C3 to the output shaft U by obstructing the reverse rotation of the ring gear R3 by the one-way clutch F-2.

Next, a 2nd speed rotation is established when the auxiliary transmission mechanism D is directly connected to apply the clutch C-1 and the brake B-3. At this time, the input fed to the ring gear R2 of the gear unit P2 is outputted, by using the carrier C1 of the gear unit P1 as a reaction element, to the carrier C2 of the gear unit P2 and the ring gear R1 of the gear unit P1, as directly connected to the former, thereby to establish the 2nd speed rotation of the output shaft U. On the other hand, a 3rd speed rotation is established when the auxiliary transmission mechanism D is also directly connected to apply the clutch C-1 and the brake B-2 while releasing the remaining elements. At this time, the input fed to the ring gear R2 of the gear unit P2 is outputted, by using the sun gear S2 as a reaction element, to the carrier C2 thereby to establish the 3rd speed rotation of the output shaft U.

Moreover, a 4th speed rotation is established when the auxiliary transmission mechanism D is also directly connected to apply both the clutch C-1 and the clutch C-2. At this time, the input is fed to the ring gear R2 and the sun gear S2 so that the gear unit P2 is directly connected to output the input rotation as it is. Moreover, a 5th speed rotation is established, with the main transmission mechanism M being in the aforementioned 4th speed rotation, by releasing the clutch C-0 and by applying the brake B-0 to fix the sun gear S0 thereby to accelerate the rotation of the auxiliary transmission mechanism D. On the other hand, the reverse run is established, with the auxiliary transmission mechanism D being in the aforementioned state, by applying the clutch C-2 and the brake B-4 of the main transmission mechanism M. At this time, the input fed to the sun gear S2 of the gear unit P2 is outputted as the reverse rotations of the carriers C2 and C3 of the gear units P2 and P3 by using the ring gear R3 as a reaction element.

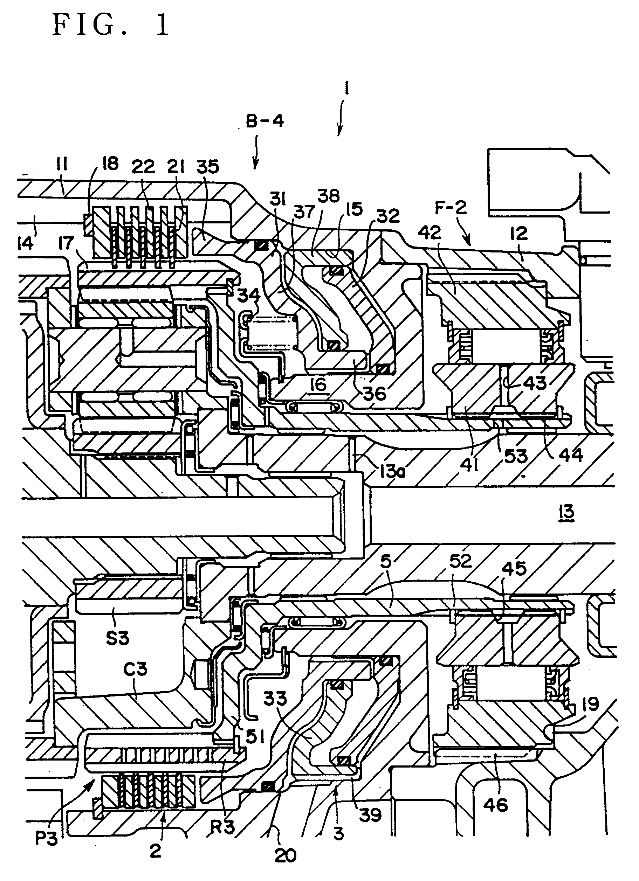

In the automatic transmission 1 thus constructed, the present invention is applied to the brake B-4 and the one-way clutch F-2, which are related to the planetary gear unit 3. As shown in Fig. 1, the shift control system for an automatic transmission, is constructed to comprise: a frictional engagement element 2 composed of a hub side friction member 21 and a case side friction member 22 and arranged between the case 11 of the automatic transmission 1 and the ring gear R3 or one element of the planetary gear unit P3; a hydraulic servo unit 3 for pushing the frictional engagement element 2 in the axial direction; and the one-way clutch F-2 connected to the ring gear R3 of the planetary gear unit P3 for disengageably fixing the same to the case 11. The one-way clutch F-2 is so arranged at the side axially opposite to the frictional engagement element 2 across the hydraulic servo unit 3 as to have its outer race 42 connected to a case 12 made separate from the case 11 and its inner race 41 connected to the ring gear R3 of the planetary gear unit P3 through a connection member 5 axially extending in the inner circumferential side of the hydraulic servo unit 3. Moreover, the inner race 41 is formed with a radial lubricating oil passage 43 leading to an oil passage 13 in a transmission shaft.

The constructions of the individual portions will be described in more detail. The case 11 is formed with: an inner circumferential spline 14 for fitting the outer circumferential spline of the case side friction member 22 to stop the rotation of the same; and a cylinder space 15 for having the two pistons 31 and 32 and an intermediate separator piston 33 fitted therein slidably in the axial direction. On the outer circumference of the front end (as the front will be conveniently referred to as the input side whereas the rear as the output side) of a ring portion 16 defining the inner circumferential side of the cylinder space 15, there is snapped through a seat a return spring 34 which is to come into abutment against the piston 31.

The frictional engagement element 2 is composed of the case side friction member 22 having a splined outer circumference, and the hub side friction member 21 having a splined inner circumference. These friction members are alternately laminated and are axially slidably fitted in the splines 14 and 17, which are individually formed in the brake hubs of the case 11 and the ring gear R3. The frictional engagement element 2 is arranged to have its front end regulated in its sliding motion by a snap ring 18 fixed in the circumferential wall crossing the spline 14 of the case 11 and its rear end facing the piston 31.

The hydraulic servo unit 3 is given a double-piston construction for exhibiting a high engaging force in a limited external diameter. The front piston 31 is constructed by connecting a cylinder portion 35 extending forward from the outer circumferential side and a cylinder portion 36 extending backward from the inner circumferential side by a plate-shaped portion 37 having its outer circumferential side inclined forward. The rear piston 32 is formed into a plate shape having its outer circumferential side inclined forward. Between these two pistons, there is arranged the separator piston 33 which has a cylinder portion 38 having its outer circumferential side inclined forward and extending backward from the outer circumference of the front end. The cylinder portion 38 has its inner circumference fitted in the outer circumference of the inner circumferential cylinder portion 36 of the piston 31 and its outer circumferential cylinder portion 38 fitted on the inner circumference of the cylinder space 15 such that their mutual sliding circumferences are sealed up through O-rings.

The one-way clutch F-2 is formed into such a free wheel shape having a roller interposed between the inner race 41 and the outer race 42. The inner race 41 is formed in its inner circumference with an inner circumferential spline 44 and is formed with the radial lubricating oil passage 43 which radially extends from a circumferential groove 45 formed across the inner circumferential spline 44. The inner race 41 is so fitted in the outer circumferential spline formed in the outer circumferential rear end of the connection member 5 that it is prevented from rotation by the connection member 5, and is axially positioned by having its two ends fixed by snap rings. The outer race 42 is formed in its outer circumference with an outer circumferential spline 46 and is regulated from axial movement by having its rear end face abutting against the step portion 19 of the separate case 12.

The connection member 5 is formed into a cylinder shape in which a sleeve shaft portion 52 extends from the inner circumference of a radial flange portion 51. The connection member 5 is connected to the ring gear R3 by fitting the spline of the outer circumference of the radial flange portion 51 in the internal teeth of the ring gear R3, and the inner race 41 has its inner circumferential spline 44 fitted in the spline of the outer circumference of the rear end of the sleeve shaft portion 52. On the other hand, this sleeve shaft portion 52 is formed with a radial oil port 53 which is positioned in alignment with the circumferential groove 45 of the inner race 41.

In the control system thus constructed, the hydraulic servo unit 3 operates at the reverse time and at the engine braking time of the 1st speed. By the oil pressures to be fed to the back face of the piston 31 from the oil passage 20 formed in the case 11 and to the back face of the piston 32 via an axial groove 39 formed in the outer circumferential cylinder portion 38 of the separator piston 33, the piston 31 is pushed forward either directly by the oil pressures applied to its pressure receiving faces or by having its cylinder portion 36 pushed by the piston 32 by the oil pressure applied to its pressure receiving faces, to evenly push the end face of the frictional engagement element 2 all over the circumference by the leading end face of the cylinder portion 35 thereby to bring the two friction members 21 and 22 into engagement with each other.

The feed of the lubricating oil to the one-way clutch F-2 is effected upon the roller by way of the oil passage 13 in the output shaft, a radial oil passage 13a. the space between the output shaft U and the connection member 5, the radial oil passage 53 of the connection member 5, and the circumferential groove 45 and the radial lubricating oil passage 43 of the inner race 41. This oil feed can be smoothly carried out by the centrifugal oil pressure which is established by the centrifugal force acting upon the lubricating oil in accordance with the rotations of the output shaft U, the connection member 5 and the inner race 41 (excepting the 1st speed engine braking time with the brake B-4 being applied, the reverse time, and the 1st speed time with the one-way clutch F-2 being applied).

In short, according to the shift control system of the embodiment thus far described, it is possible at the same time to uniform the facial pressures for applying the brake friction members and to simplify the oil circuit construction for lubricating the one-way clutch F-2. In this embodiment, moreover, the one-way clutch F-2 is disposed outside unlike the aforementioned prior art, as disclosed in Japanese Patent Laid-Open No. 126174/1993, the brake B-4 can have its piston constructed of the double pistons 31 and 32 to intensify the applying force without increasing the axial size of the transmission case 11, so that the number of the friction members of the brake B-4 can be accordingly reduced to lower the dragging torque. Thanks to the external disposition of the one-way clutch F-2, moreover, the transmission case 11 can be standardized, and the manufacture process can be simplified and carried out at a lower cost by commonly using the case 11 of the transmission of another type using no one-way clutch F-2. Since, moreover, the portion for mounting the frictional engagement element 2 at the side of the case 11 and the portion for mounting the outer race 42 at the side of the case 12 are separate, the degree of freedom for designing the means for mounting the one-way clutch F-2 in the outer race can be improved to make the spline finer for mounting the outer race thereby to intensify the applying force. As to the outer race 42 mounted in the case 12, the axial stopper by the snap ring or the like is eliminated by making use of the positioning effect using the end face of the case 12 so that the construction of the mounting portion is also simplified.

Although the present invention has been described in detail hereinbefore in connection with its embodiment, it should not be limited thereto but can have its specific construction modified in various manners within the scope of the claim.

## Claims

1. A shift control system for an automatic transmission, comprising: a frictional engagement element arranged between the case of an automatic transmission and one element of a planetary gear unit; a hydraulic servo unit for pushing said frictional engagement element in the axial direction; and a one-way clutch connected to the element of said planetary gear unit and disengageably fixed to said case,
wherein said one-way clutch is so arranged at the side axially opposite to said frictional engagement element across said hydraulic servo unit as to have its outer race connected to a case and its inner race connected to the element of said planetary gear unit through a connection member axially extending in the inner circumferential side of said hydraulic servo unit, and
wherein said inner race is formed with a radial lubricating oil passage leading to an oil passage in a transmission shaft.

2. An automatic transmission shift control system according to claim 1, wherein said case includes: a first case accommodating said frictional engagement element, said planetary gear unit and said hydraulic servo unit; and a second case accommodating said one-way clutch, and wherein said outer race is connected to said second case.

3. An automatic transmission shift control system according to claim 1 or 2, wherein said planetary gear unit includes a sun gear, a carrier and a ring gear, and wherein said frictional engagement element is arranged between said case and said ring gear and around the outer circumferential side of said ring gear.

4. An automatic transmission shift control system according to claim 1, 2 or 3, wherein said connection member includes: a radial flange portion fitted on one end of said ring gear; and a sleeve shaft portion extending in the axial direction from said radial flange portion along the inner circumferential side of said hydraulic servo unit and fitted in the inner circumferential side of said inner race, and wherein the fitted portion of said sleeve shaft portion in said inner race is formed with a radial oil port leading to said radial lubricating oil passage.

5. A system according to any of claims 1 to 4, wherein said hydraulic servo unit includes: a first piston for directly pushing said frictional engagement element in the axial direction; a second piston for coming into abutment against said first piston in the axial direction; and a cylinder for fitting said first and second pistons slidably in the axial direction and formed integrally with said case.

6. An automatic transmission shift control system according to claim 5, wherein said case includes: a first case accommodating said frictional engagement element, said planetary gear unit and said hydraulic servo unit; and a second case accommodating said one-way clutch, and wherein said cylinder is formed integrally with said first case.

7. A system according to any of claims 1 to 6, wherein there is arranged in the inner circumferential side of said connection member a shaft which supports said connection member through a support member and to which is connected the one element of said planetary gear unit, and wherein said shaft is formed with a radial oil passage leading from said transmission shaft oil passage to said radial lubricating oil passage.

8. An automatic transmission shift control system according to claim 7, wherein said frictional engagement element includes a sun gear, a carrier and a ring gear, and wherein said shaft is connected to said carrier.
